# EUROPÄISCHE PATENTSCHRIFT

(11) **EP 1 658 421 B1**
(45) Veröffentlichungstag und Bekanntmachung des Hinweises auf die Patenterteilung: **12.03.2008**
(21) Anmeldenummer: 04741334.9
(22) Anmeldetag: 30.07.2004
(51) Int. Cl.: F01N 3/28, B01J 35/04, B23K 11/00

(54) **ROLLNAHTGESCHWEISSTER KÖRPER ZUR ABGASBEHANDLUNG**
ROLLER SEAM WELDED BODY FOR EXHAUST TREATMENT
CORPS SOUDE A LA MOLETTE DESTINE AU TRAITEMENT DE GAZ D'ECHAPPEMENT

(30) Priorität: 13.08.2003 DE 10337265
(43) Veröffentlichungstag der Anmeldung: 24.05.2006
(73) Patentinhaber: Emitec Gesellschaft für Emissionstechnologie mbH, 53797 Lohmar (DE)
(72) Erfinder: HIRTH, Peter, 51503 Rösrath (DE); BRÜCK, Rolf, 51429 Bergisch Gladbach (DE); HÄRIG, Thomas, 53819 Neunkirchen-Seelscheid (DE)
(74) Vertreter: Kahlhöfer, Hermann
(86) Internationale Anmeldenummer: PCT/EP2004/008560
(87) Internationale Veröffentlichungsnummer: WO 2005/019617

(56) Entgegenhaltungen:
- EP-A- 0 665 367
- EP-A- 1 230 978
- DE-C- 4 411 302
- GB-A- 2 139 131
- US-A- 4 316 823
- PATENT ABSTRACTS OF JAPAN Bd. 0143, Nr. 56 (C-0745), 2. August 1990 (1990-08-02) & JP 2 131142 A (USUI INTERNATL IND CO LTD), 18. Mai 1990 (1990-05-18)
- PATENT ABSTRACTS OF JAPAN Bd. 0135, Nr. 79 (C-668), 20. Dezember 1989 (1989-12-20) & JP 1 242153 A (CALSONIC CORP), 27. September 1989 (1989-09-27)

## Beschreibung

Die vorliegende Erfindung betrifft ein Verfahren zur Herstellung eines Körpers zur Abgasbehandlung, welcher eine Mehrzahl von metallischen Lagen aufweist, die für einen Gasstrom durchströmbare Kanäle bilden. Derartige Körper werden insbesondere zur Abgasreinigung mobiler Verbrennungskraftmaschinen, wie Otto- oder Dieselmotoren, eingesetzt. Hauptanwendungsgebiete sind dabei Personenkraftfahrzeuge, sowie Lastkraftwagen und Motorräder. Ebenso ist deren Verwendung in Abgassystemen von mobilen Handgeräten wie beispielsweise Motorsägen, Rasenmähern etc. bekannt.

Solche Körper haben vielfach unterschiedliche Funktionen. So werden sie beispielsweise als Katalysator-Trägerkörper, als sogenannte Adsorber, als Filter, Strömungsmischer oder Schalldämpfer eingesetzt. Der Körper zeichnet sich üblicherweise durch ein günstiges Verhältnis von Oberfläche zu Volumen aus, er hat also eine relativ große Oberfläche und gewährleistet somit einen intensiven Kontakt mit dem ihn durchströmenden Gasstrom.

Im Hinblick auf Katalysator-Trägerkörper wird diese Oberfläche bzw. der Körper mit einer katalytisch aktiven Beschichtung versehen, die bevorzugt Washcoat umfasst. Der Washcoat weist eine besonders zerklüftete Oberfläche auf, so dass das Verhältnis von Oberfläche zu Volumen noch weiter verbessert werden kann. Der Washcoat ist mit unterschiedliche Katalysatoren imprägniert, beispielsweise Platin, Rhodium od. dgl..

Adsorber weisen im wesentlichen eine ähnliche Grundstruktur auf, wie sie auch bei Körpern als Katalysator-Trägerkörper gewählt wird. Im Hinblick auf die Beschichtung wird jedoch ein anderes Ziel verfolgt, so dass folglich andere Beschichtungen zum Einsatz gelangen. Aufgabe der Adsorber ist es, beispielsweise Stickoxide aufzuhalten, bis entsprechende Reaktionspartner bzw. Temperaturen vorhanden sind, die eine möglichst vollständige Umsetzung dieser Bestandteile des Abgases ermöglichen.

Strömungsmischer zeichnen sich dadurch aus, dass deren Körper eine Vielzahl von Kanälen aufweisen, die miteinander strömungstechnisch verbunden sind. Gleichzeitig sind Leitflächen im Inneren des Körpers bzw. der Kanäle vorgesehen, die eine Umlenkung der Teilgasströme ermöglichen. Auf diese Weise wird der Gasstrom hin Hinblick auf seine Schadstoffkonzentration, sein Strömungsverhalten, seine Temperatur, etc. vergleichmäßigt.

Bezüglich der oben genannten Körper als Katalysator-Trägerkörper, Adsorber, Schalldämpfer und Strömungsmischer sind eine Vielzahl unterschiedlicher Bauformen bekannt. Diese umfassen beispielsweise auch Wabenkörper mit zumindest teilweise strukturierten Blechfolien. Gegenüber Körpern, die aus keramischem Material bekannt sind, haben die metallischen Wabenkörper eine deutlich höhere Flexibilität im Hinblick auf ihren Einsatzzweck und bieten zudem eine höhere Gestaltungsfreiheit. Weiter ist zu berücksichtigen, dass aufgrund der guten Wärmeleitung und der extrem niedrigen oberflächenspezifischen Wärmekapazität besonders effektive Umsetzungsprozesse hinsichtlich der Schadstoffkonzentration gewährleistet werden.

Man unterscheidet vor allem zwei typische Bauformen für metallische Wabenkörper. Eine frühe Bauform, für die die DE 29 02 779 A1 typische Beispiele zeigt, ist die spiralige Bauform, bei der im wesentlichen eine glatte und eine gewellte Blechlage aufeinandergelegt und spiralförmig aufgewickelt werden. Bei einer anderen Bauform wird der Wabenkörper aus einer Vielzahl von abwechselnd angeordneten glatten und gewellten oder unterschiedlich gewellten Blechlagen aufgebaut, wobei die Blechlagen zunächst einen oder mehrere Stapel bilden, die miteinander verschlungen werden. Dabei kommen die Enden aller Blechlagen außen zu liegen und können mit einem Gehäuse oder Mantelrohr verbunden werden, wodurch zahlreiche Verbindungen entstehen, die die Haltbarkeit des Wabenkörpers erhöhen. Typische Beispiele dieser Bauformen sind in der EP 0 245 737 B1 oder der WO 90/03220 beschrieben. Auch seit langem bekannt ist es, die Blechlagen mit zusätzlichen Strukturen auszustatten, um die Strömung zu beeinflussen und/oder eine Quervermischung zwischen den einzelnen Strömungskanälen zu erreichen. Typische Beispiele für solche Ausgestaltungen sind die WO 91/01178, die WO 91/01807 und die WO 90/08249. Schließlich gibt es auch Wabenkörper in konischer Bauform, gegebenenfalls auch mit weiteren zusätzlichen Strukturen zur Strömungsbeeinflussung. Ein solcher Wabenkörper ist beispielsweise in der WO 97/49905 beschrieben. Darüber hinaus ist es auch bekannt, in einem Wabenkörper eine Aussparung für einen Sensor freizulassen, insbesondere zur Unterbringung einer Lambdasonde. Ein Beispiel dafür ist in der DE 88 16 154 U1 beschrieben.

Selbstverständlich sind die zuvor beschriebenen Bauformen auch geeignet, Filterkörper zu bilden. Grundsätzlich sind bei solchen oder anderen Filterkörpern zwei unterschiedliche Prinzipien bekannt. Das eine Prinzip betrifft den sogenannten "geschlossenen Partikelfilter", bei dem die vom Körper gebildeten Kanäle wechselseitig verschlossen sind, und somit den Gasstrom durch Kanalwände mit Filtermaterial hindurch zwingen. Dabei kommt es zur Anlagerung von im Gasstrom enthaltenen Partikeln bzw. Feststoffen, die kontinuierlich oder in vorgebbaren Abständen verbrannt bzw. aufoxidiert werden. Alternativ dazu ist auch das Konzept des "offenen Partikelfilters" bekannt, der nicht wechselseitig verschlossen ist, sondern im Inneren der Kanäle Strömungsumlenkungspunkte aufweist, die eine solche Verwirbelung der Teilgasströme bewirken, dass zumindest 80 % der Teilgasströme durch die Filterwand hindurchtreten, wobei dies vorzugsweise mehrmals passiert. Der große Vorteil des "offenen Partikelfilters" ist, dass ein Verstopfen des Filtermaterials infolge einer zu großen Ansammlung von Partikeln vermieden wird. Ein Partikelfilter wird dann als "offen" bezeichnet, wenn er grundsätzlich von Partikeln vollständig durchlaufen werden kann, und zwar auch von Partikeln, die erheblich größer als die eigentlich auszufilternden Partikel sind. Dadurch kann ein solcher Filter selbst bei einer Agglomeration von Partikeln während des Betriebes nicht verstopfen. Ein geeignetes Verfahren zur Messung der Offenheit eines Partikelfilters ist beispielsweise die Prüfung, bis zu welchem Durchmesser kugelförmige Partikel noch durch einen solchen Filter rieseln können. Bei vorliegenden Anwendungsfällen ist ein Filter insbesondere dann offen, wenn Kugeln von größer oder gleich 0,1mm Durchmesser noch hindurchrieseln können, vorzugsweise Kugeln mit einem Durchmesser oberhalb von 0,2mm. Ein Beispiel hierfür findet sich in der DE 2011783 U1, auf die zur Erläuterung voll Bezug genommen wird.

Neben solchen Körpern mit gewickelten bzw. gewundenen Lagen sind auch noch sogenannte Plattenfilter bekannt, die eine Mehrzahl von voneinander beabstandet angeordneten, insbesondere flächigen bzw. im wesentlichen ebenen Filterplatten umfasst. Üblicherweise werden solche Plattenfilter auch nach dem Prinzip der wechselseitig verschlossenen Kanäle gebaut, grundsätzlich ist aber auch möglich, einen "offenen Partikelfilter" zu verwirklichen.

Während solche Wickel-Bauformen bzw. Platten-Bauformen im wesentlichen axial von dem Gasstrom durchströmt werden, sind auch radial durchströmbare Körper bzw. Filterkörper bekannt. Diese weisen üblicherweise einen inneren Strömungskanal sowie einen ringförmig gebildeten, zumeist koaxial zum innen liegenden Strömungskanal, angeordneten äußeren Strömungskanal auf Der innere Strömungskanal wird zumeist von einem Innenrohr begrenzt, das mit Öffnungen versehen ist, durch welche der zu reinigende Gasstrom geführt wird. Um dieses Innenrohr herum sind Lagen aus einem Filtermaterial angeordnet. Hierbei sind im wesentlichen zwei unterschiedliche Konzepte bekannt. Das erste Konzept lässt sich anhand eine "Sternform" beschreiben, die sich bei der Betrachtung der Filterplatten in Richtung des Innenrohrs bzw. eines Querschnitt senkrecht zum Innenrohr ergibt. D. h. mit anderen Worten, dass die Filterplatten Falten bilden, die sich im wesentlichen parallel zur axialen Ausdehnung des Innenrohres erstrecken. Weiterhin ist auch das Konzept bekannt, welches in Umfangsrichtung Falten bildet, wobei mehrere solcher Falten axial zueinander beabstandet auf dem Innenrohr positioniert sind. Entsprechend der Strömungsführung wird der zu reinigende Gasstrom von innen (oder von außen) zu dem Filtermaterial zugeführt, durchdringt dieses und wird auf der gegenüber liegenden Seite wieder abgeführt.

Die GB 2 139 131 offenbart für die Herstellung von Filterbeuteln eine intermittierende Schweißverbindung im Randbereich des Filterbeutels durch Rollnahtschweißen. Dabei wird ein metallisches Filtermaterial in einem Randbereich durch voneinander beanstandete Schweißpunkte derartig verbunden, dass der so erzeugte Filterbeutel biegeelastisch ist.

Die DE 44 11 302 offenbart ein Verfahren zur Herstellung eines beschichteten monolithischen Katalysatorträgerkörpers, der mit einem oder mehreren zuvor mit einer Dispersionsbeschichtung beschichteten glatten und/oder gewellten Metallfolien gebildet ist. Dabei werden die Metallfolienbänder mit jeweils mindestens einem benachbarten Metallfolienband bzw. mit mindestens einer benachbarten Lage fügetechnisch während und/oder nach der Bildung des Formkörpers zum Beispiel durch Rollnahtschweißen verbunden.

Die zuvor beschriebenen Körper umfassen zumeist eine Mehrzahl bzw. Vielzahl unterschiedlicher Komponenten aus zum Teil verschiedenen Materialien. In Anbetracht der hohen thermischen und dynamischen Belastung im Abgassystem mobiler Verbrennungskraftmaschinen müssen diese einzelnen Komponenten dauerhaft miteinander verbunden werden. Hierzu sind viele unterschiedliche Verbindungstechniken bekannt, beispielsweise das Löten und/oder das Schweißen. Im Hinblick auf diese Verbindungstechniken ist zu berücksichtigen, dass sie für eine mittlere Serienfertigung geeignet sein müssen. Dabei spielen Kostengesichtspunkte ebenso eine wichtige Rolle, wie Taktraten, Verbindungsqualität, Prozesssicherheit, etc.. Bekannte Verfahren zur Ausbildung fügetechnischer Verbindungen (insbesondere der die Filterflächen umfassenden Struktur bzw. der Lagen) erfordert einen Zusatzwerkstoff, wie beispielsweise Lotmittel oder Schweißzusatzwerkstoff Dabei ist es besonders schwierig, den Zusatzwerkstoff genau an der Stelle zu applizieren, an der später eine Verbindung generiert werden soll. Außerdem ist festzustellen, dass zunehmend dünnwandigere Materialien eingesetzt werden sollen, da sich diese sehr schnell der Temperatur des Abgases anpassen und demnach ein recht dynamisches Reaktionsverhalten aufweisen. Um die dauerhafte Funktionalität solcher Körper zu gewährleisten, ist jedoch eine räumlich eng begrenzte Wärmeeinbringung zur Ausbildung der fügetechnischen Verbindungen erforderlich. Dies konnte bislang nicht in zufriedenstellendem Maße erreicht werden, erfordert doch das Löten in der Regel eine Erwärmung des gesamten Körpers in einem Hochtemperatur-Vakuum-Ofen, und das Schweißen erfolgte üblicherweise auch durch das äußere Gehäuse hindurch, so dass auch hier erhebliche Temperaturgradienten über einen großen Teilbereich des Körpers verwirklicht wurden.

Ausgehend hiervon ist es Aufgabe der vorliegenden Erfindung, die vorstehenden technischen Probleme des Standes der Technik zu überwinden. Insbesondere soll ein kostengünstiges, einfaches, effektives und prozesssicheres Verfahren zur Herstellung von solchen metallischen Körpern zur Abgasreinigung angegeben werden. Das Verfahren soll zudem nach Möglichkeit automatisiert ablaufen können, wobei fügetechnische Verbindungen generiert werden, die sich durch eine besonders hohe Lebensdauer auszeichnen. Weiterhin soll ein entsprechender Körper zur Abgasbehandlung angegeben werden, der variabel gestaltbar und vielfältig einsetzbar ist.

Diese Aufgaben werden gelöst durch ein Verfahren mit den Merkmalen des Patentanspruchs 1 sowie einem Körper mit den Merkmalen des Patentanspruchs 12. Weitere vorteilhafte Ausgestaltungen sind in den jeweils abhängigen Patentansprüchen beschrieben, die beliebig miteinander kombinierbar sind.

Bei dem erfindungsgemäßen Verfahren zur Herstellung eines Körpers zur Abgasbehandlung, welche eine Mehrzahl von metallischen Lagen aufweist, werden die Lagen in einem Verbindungsbereich miteinander in Kontakt gebracht werden und es wird eine Verbindung mit einem fortlaufenden Widerstandsschweißverfahren derart erzeugt, dass die Lagen für einen Gasstrom zumindest teilweise durchströmbare Kanäle bilden. D. h. mit anderen Worten insbesondere, dass die Verbindung benachbart zueinander angeordneter Lagen zueinander bzw. miteinander durch das fortlaufende Widerstandsschweißverfahren erfolgt.

In diesem Zusammenhang ist darauf hinzuweisen, dass "fortlaufend" bedeuten kann, dass die Schweißung entlang einer Schweißbahn erfolgt, wobei die dabei generierte Schweißnaht ununterbrochen ausgeführt ist. Dies muss aber nicht zwingend der Fall sein; so ist es beispielsweise auch möglich, dass entlang der Schweißbahn eine Mehrzahl von beabstandeten Schweißnähten vorgesehen wird, wobei vorteilhafterweise der Anteil der Schweißnähte entlang der Schweißnaht deutlich größer als der Anteil der Unterbrechungen ist. Besonders bevorzugt beträgt der Anteil der Schweißnaht bezogen auf die Schweißbahn mindestens 80%, insbesondere sogar mehr als 90%.

Im Hinblick auf die "Kanäle" ist noch anzumerken, dass diese nicht zwingend eine rohrähnlichen Aufbau aufweisen müssen. Vielmehr ist hier ein begrenzter Strömungspfad gemeint, der eine räumliche Begrenzung aufweist. Dabei ist die Begrenzung in der Regel so gestaltet, dass sie den Strömungspfad über mindestens 60% (insbesondere 80%) des Umfangs her umschließt, wobei vorteilhafterweise die Länge des Strömungspfades größer als der Umfang.

In Anbetracht der Tatsache, dass der benannte Körper auch als Filter aufgebaut sein kann ist klar, dass die Kanäle nicht zwingend eine gasdichte Kanalwand aufweisen müssen, die Lagen also durchaus auch zumindest teilweise gasdurchlässig ausgestaltet sein können. Gerade in diesem Fall wird der Kanal nicht vollständig vom Gasstrom durchströmt, wobei der Kanal zwar einen entsprechend geeigneten Querschnitt aufweist, der Gasstrom aber dennoch einen anderen Weg nutzt. Deshalb wird es als ausreichend angesehen, wenn der Kanal die Möglichkeit bietet, zumindest teilweise für einen Gasstrom durchströmbar zu sein, insbesondere mit offenen Stirnseiten.

Dabei umfasst das fortlaufende Widerstandsschweißverfahren Rollnahtschweißen und gegebenenfalls Buckelnaht-schweißen.

Das Rollnahtschweißen wie auch das Buckelnahtschweißverfahren gehören zu den Press-Verbindungsschweißverfahren, insbesondere dem Widerstandspressschweißen bzw. dem konduktiven Pressschweißen. Bei dem Verfahren des Widerstandspressschweißens erfolgt die Erwärmung an der Schweißstelle infolge Joule'scher Widerstandserwärmung bei Stromfluss und durch einen elektrischen Leiter. Die Stromzufuhr erfolgt über Elektroden-mit einer balligen bzw. planen Arbeitsfläche. Zum Rollennahtschweißen werden zwei rollenförmige, (angetriebene) Elektroden eingesetzt. Die zu verschweißenden Bleche sind hierbei überwiegend überlappt angeordnet. Beim Rollennahtschweißen handelt es sich praktisch um eine fortlaufende Punktschweißung, allerdings mit rollenförmigen Elektroden. Im Gegensatz zum Widerstandspunktschweißen bleiben die Elektroden nach der Erstellung des ersten Schweißpunktes aufgesetzt und drehen sich fortgesetzt weiter. An den Stellen, wo ein Schweißpunkt entstehen soll, erfolgt ein erneuter Stromfluss. Abhängig von der Vorschubgeschwindigkeit der Elektroden und der Frequenz des Schweißstromes werden Punktnähte oder Dichtnähte mit überlappenden Schweißlinsen bzw. Schweißpunkten erzeugt. Mit Dauergleichstrom wird ebenfalls eine Dichtnaht erzeugt.

Der Einsatz dieses Fertigungsverfahrens zur Verbindung der Lagen hat sich gerade im Hinblick auf die Serienfertigung solcher Körper als besonders vorteilhaft herausgestellt. Das Verfahren, bei dem die beiden Lagen benachbart bzw. aufeinander liegend durch die sich drehenden Elektroden hindurchgeführt wird, ist überraschenderweise den hohen thermischen und dynamischen Belastungen beispielsweise im Abgassystem von Automobilen gewachsen. Auch wurde festgestellt, dass selbst bei sehr dünnen Metallfolien, die auf diese Weise miteinander verbunden werden, dichte Schweißnähte in sehr kurzen Arbeitszyklen herstellbar sind. Dadurch lässt sich insbesondere ein Kostenvorteil verzeichnen, der wegen des zusätzlichen Materials, welches zum Überlappen der beiden Lagen benötigt wird, so nicht zu erwarten war. Das Rollnahtschweißen eignet sich insbesondere für Verbindungsbereiche, die eine bestimmte Länge haben, sich also über einen vorgegebenen Abschnitt erstrecken. Dieser sollte in der Regel zumindest 5 cm betragen, insbesondere mindestens 15 cm, wobei ab einer Länge von 25 cm besonders kostengünstig gearbeitet wird. Das Rollnahtschweißen kommt ohne Zusatzwerkstoff aus. Weiterhin ist es vielfach auch möglich, einen Reinigungsschritt der Lagen wegzulassen, denn durch die Einbringung der Elektrodenkraft ist gewährleistet, dass bereits in erheblichem Maße ein für den Stromfluss und die Bildung des Schweißpunktes ausreichender Kontakt der Elektroden bzw. der Lagen miteinander gewährleistet ist Zudem ist gerade benachbart zur Schweißlinse nur eine unwesentliche Änderung des Gefüges der Lage feststellbar. Demnach bietet der Einsatz dieses Fertigungsverfahren eine viele Vorteile und überwindet gleichzeitig alle eingangs aufgeführten technischen Probleme auf einmal. Außerdem ist das Verfahren auch auf jeden der eingangs genannten Arten von Körpern anwendbar.

Weiterhin liegt eine Vorschubgeschwindigkeit beim Rollnahtschweißen im Bereich von 0,5 cm/s bis 30 m/s, insbesondere im Bereich von 0,5 m/min bis 30 m/min vor. Diese Vorschubgeschwindigkeit kommt insbesondere bei der Verbindung von metallischem Folienmaterial zum Einsatz, welches eine Dicke von 0,03 bis 0,1 mm hat. Dabei weist das miteinander zu verbindende Material bevorzugt folgende Bestandteile auf: Aluminium von 0,1 bis 7,5 Gew.-% und Chrom von 17 bis 25 Gew.-%. Ein weiteres bevorzugtes Material umfasst von 12 bis 32 Gew.-% Nickel.

Weiter wird auch angegeben, dass die Elektroden während des Schweißvorgangs eine Kraft von 10 N bis 20 kN, insbesondere von 200 N bis 6 kN auf die Lagen ausüben. Dadurch wird sichergestellt, dass beispielsweise an den Lagen haftendes walzöl oder ähnliche Verunreinigungen aus der Schweißstelle gedrückt werden. Somit findet sowohl ein intensiver Kontakt der miteinander zu verbindenden Bauteile als auch der Bauteile mit den Elektroden statt. Gleichzeitig wird auf diese Weise gewährleistet, dass beim Erwärmen des Materials eine Durchmengung der erwärmten bzw. schmelzförmigen Materialien erfolgt, so dass eine dauerhafte Verbindung erzielt wird.

Weiter wird erfindungsgemäß vorgeschlagen, dass die Lagen mit Stützmitteln ausgeführt sind, die vorzugsweise in einem Kanal und/oder in einer Falte angeordnet werden. Unter Stützmittel sind insbesondere Abstandshalter, Versteifungsstrukturen, Distanzstücke oder ähnliche Mittel zu verstehen, die gewährleisten, dass die vorgegebene Position der Lagen zueinander auch während des späteren Einsatzes im Abgassystem mobiler Verbrennungskraftmaschinen beibehalten wird.

Dabei ist das Verfahren so auszuführen, dass die Stützmittel mit der Lage durch das Fertigungsverfahren Rollnahtschweißen verbunden werden, vorzugsweise gleichzeitig mit dem Ausführen einer Verbindung der Lagen untereinander. So können die Stützmittel beispielsweise als Struktur der metallischen Folie ausgebildet sein, die somit an Bereichen der benachbarten Lage anliegen und den Öffnungswinkel bzw. den Abstand der zueinander beabstandeten Lagen sicherstellen. Die erfindungsgemäße Verbindung der Lagen mit einer fortlaufenden Widerstandsschweißnaht kann auch unter Einbeziehung dieser Stützmittel vorgenommen werden, unter Umständen werden die Lagen sogar ausschließlich über die Stützmittel miteinander verschweißt.

Gemäß einer Weiterbildung des Verfahrens wird vorgeschlagen, dass zumindest teilweise eine Dichtnaht gebildet wird, wobei zumindest überlappende Schweißpunkte vorliegen. Dies betrifft insbesondere den Fall, dass die Lagen mit ihren Enden bzw. Randbereichen zueinander fixiert werden sollen. Diese Randbereiche bzw. Kanten verschließen beispielsweise Strömungswege, so dass das zu reinigende Abgas gezwungen wird, durch ein Filtermaterial hindurchzutreten. Zur Gewährleistung des Prinzips "geschlossener Partikelfilter" sollte zumindest teilweise eine Dichtnaht vorliegen. Darunter ist zu verstehen, dass die Schweißstromimpulse in solch kurzen Zeitabschnitten hintereinander erfolgen, dass die jeweils benachbart angeordneten Schweißpunkte bzw. Schweißlinsen ineinander übergehen, also zwischen benachbarten Schweißpunkte keine unverbundenen Stellen der Lagen existieren. Wie bereits oben ausgeführt, wird eine solche Dichtnaht dadurch erreicht, dass die Frequenz der Stromimpulse relativ kurz gewählt ist, die Vorschubgeschwindigkeit relativ klein ist oder dass Gleichstrom anliegt, also während des Vorschubs kontinuierlich Strom zwischen den Elektroden fließt.

Gemäß einer weiteren Ausgestaltung des Verfahrens werden die Lagen zumindest in einem Randbereich aufeinander gelegt, in diesem Randbereich wenigstens über einen Abschnitt geschweißt und dann umgeformt, so dass die Kanäle gebildet sind. Das bedeutet mit anderen Worten auch, dass die Schweißnaht zumindest teilweise den für das Abgas durchströmbaren Kanal begrenzt. Im Hinblick auf die bevorzugten Beträge der Länge des Abschnittes sei auf die obigen Ausführungen verwiesen. Grundsätzlich ist jedoch auch anzumerken, dass üblicherweise die kompletten Randbereiche miteinander verbunden werden, demnach also der Abschnitt der längsten Erstreckung des Randbereichs entspricht.

Insbesondere wird vorgeschlagen, dass die Lagen mit zumindest einer metallischen Folie aus einem hochtemperaturfesten und korrosionsbeständigen Material gebildet sind, die bevorzugt zumindest teilweise strukturiert und/oder für ein Fluid wenigstens bereichsweise durchströmbar ist Im Hinblick auf das Material der metallischen Folie sei an dieser Stelle auf die Zusammensetzung verwiesen, wie sie vorstehend aufgeführt ist Darüber hinaus sind dem Fachmann jedoch noch eine Vielzahl weiterer Materialien bekannt, die für den Einsatz in mobilen Abgassystemen geeignet sind. Hierbei sei auf die Vielzahl von unterschiedlichen Materialien verwiesen, die sich aus dem bekannten Stand der Technik ergeben. Bei der Auswahl ist noch zu berücksichtigen, dass dieser Werkstoff bzw. das Material für das Widerstandsschweißen allgemein geeignet sein muss, also insbesondere auch stromleitend.

Die bevorzugte Ausgestaltung der metallischen Folie mit Strukturen bzw. Durchbrechungen, Poren, Löchern od. dgl. liegt dabei überwiegend außerhalb der Randbereiche vor, die für eine Verbindung mit dem Rollnahtschweißen herangezogen werden. Als Strukturen kommen beispielsweise Wellungen, Leitschaufeln, Prägungen oder sonstige Strukturen in Betracht. Sie dienen üblicherweise dazu, das an der metallischen Folie entlangströmende Abgas zu führen oder zu verwirbeln, um auf diese Weise einen innigen Kontakt mit der Oberfläche des Körpers zu gewährleisten. Weiterhin können diese Strukturen auch dazu eingesetzt werden, dass die Lagen zueinander einen vorgebbaren Abstand zueinander aufweisen. In diesem Fall stellt die Strukturierung eine Art Abstandshalter dar. Durch die wenigstens bereichsweise durchströmbare Ausgestaltung der Folie wird erreicht, dass durch die metallische Folie hindurch ein Gasaustausch stattfinden kann. Dieser orientiert sich üblicherweise an einer gezwungenen Strömung, beispielsweise durch Umlenkschaufeln, Dichtmaterialien, etc. oder durch Druckunterschiede in benachbarten Kanälen, die jeweils von der metallischen Folie zumindest teilweise begrenzt werden.

Gemäß einer vorteilhaften Weiterbildung des Verfahrens wird vorgeschlagen, dass die Lagen mit einem Filtervlies oder einer ein Filtermaterial umfassende Tragstruktur gebildet ist Ein Filtervlies umfasst insbesondere Gewirke, Gewebe oder ähnliche Anordnungen von Spänen, Fasern oder sonstigen Partikeln, die miteinander verbunden sind. Der Zusammenhalt erfolgt dabei beispielsweise über Sinterverbindungen, Lötverbindungen, Schweißverbindungen oder Kombinationen davon. Die Filtervliese können aus metallischem oder keramischem Material aufgebaut sein. Weiterhin ist es auch möglich, eine Tragstruktur vorzusehen, an bzw. in der ein Filtermaterial vorgesehen ist Als Tragstruktur kommen wiederum Gewebe, Gewirke, Streckmetalle oder ähnliche, insbesondere grobmaschige Gebilde in Betracht, in deren Hohlräume das Filtermaterial vorgesehen ist. Dabei ist es besonders vorteilhaft, dass die Tragstruktur metallisch ausgeführt ist, wobei als Filtermaterial sowohl keramische als auch metallische Materialien eingesetzt werden können. Die Verbindung des Filtermaterials mit der Tragstruktur erfolgt über Sinterverbindungen, Diffusionsverbindungen, ggf. auch unter Einsatz von Zusatzwerkstoffen, oder Kombinationen dieser Verbindungstechniken. Die erfindungsgemäße Verbindung der Lagen mit einer fortlaufenden Widerstandsschweißnaht kann auch unter Einbeziehung dieser Tragstruktur vorgenommen werden, insbesondere werden die Lagen ausschließlich über die Tragstrukturen miteinander verschweißt.

Das Filtermaterial selbst bildet eine extrem hohe Oberfläche mit einer Vielzahl von Poren, Öffnungen, Strömungspassagen und Hohlräumen. Beim Hindurchströmen des Gasstroms durch das Filtermaterial bleiben die unerwünschten Partikel an der Oberfläche haften und werden unter Zufuhr von Wärme und/oder im Abgas enthaltener Reaktionspartner in gasförmige Bestandteile umgesetzt.

Gemäß einer weiteren Ausgestaltung des Verfahrens sind die Lagen mehrteilig aufgebaut, wobei die Lagen in dem Verbindungsbereich mit einer metallischen Folie versehen ist, so dass die metallischen Folien benachbart zueinander angeordneter Lagen mittels Rollnahtschweißen verbunden werden. D.h. insbesondere, dass die Folien nur in dem Randbereich der Lagen vorgesehen sind. Sie bilden dabei vorzugsweise für ein Filtermaterial bzw. eine Tragstruktur einen für das Rollnahtschweißen geeigneten Aufbau. Auf diese Weise ist es möglich, Komponenten des Körpers, die üblicherweise nicht mit einem solchen Verfahren zu verbinden sind, an das Rollnahtschweißen anzupassen.

Dabei ist es besonders vorteilhaft, wenn die Lage ein Filtervlies umfasst, wobei das Filtervlies im dem Randbereich, der später den Verbindungsbereich bildet, von jeweils einer metallischen Folie umschlagen, und bevorzugt auch gebördelt wird, und schließlich eine Mehrzahl so hergestellter Lagen miteinander verschweißt werden. Dabei werden die Lagen insbesondere als Filterverbund bzw. Filterlage gestaltet, wie sie aus der DE 101 53 284 bzw. DE 101 53 283 hervorgehen. Im Hinblick auf den Aufbau solcher Filterlagen bzw. Filterverbunde wird vollumfänglich auf die vorstehenden Veröffentlichungen Bezug genommen, so dass die dortigen Beschreibungen zur Erläuterung des hier vorliegenden Sachverhalts herangezogen werden.

Im Hinblick auf die vorstehende Verfahrensvariante zur Herstellung des Körpers ist es besonders vorteilhaft, wenn das Bördeln und das Rollnahtschweißen gleichzeitig durchgeführt wird. Hierzu kommen beispielsweise strukturierte Rollelektroden zum Einsatz, die einerseits das miteinander Verharken der metallischen Folie mit dem Filtervlies ermöglicht und gleichzeitig infolge des Stromflusses eine fügetechnische Verbindung durch Stoffschluss ermöglicht. Dabei kann der Schweißprozess auch so durchgeführt werden, dass sich Bördelverbindungen und Schweißverbindungen in Schweißrichtung abwechseln. Unter Bördeln wird in diesem Zusammenhang insbesondere das manuelle oder maschinelle Umbiegen der Kanten von Blechteilen zur Entschärfung des Randes und/oder Versteifung des Werkstücks verstanden.

Gemäß noch einer weiteren Ausgestaltung des Verfahrens wird vorgeschlagen, dass die Lagen so miteinander verschweißt werden, dass diese in den Randbereichen wechselseitig zu jeweils einer benachbarten Lage hin verbunden sind, und derart jeweils eine Falte gebildet wird. Die hier beschriebene Vorgehensweise zur Herstellung eines Körpers ist insbesondere geeignet, Filterkörper herzustellen. Dabei werden die Lagen, die bevorzugt auch Filtervlies bzw. ein Filtermaterial umfassen, an ihren Randbereichen miteinander verbunden, um das Prinzip des "geschlossenen Partikelfilters" zu verwirklichen. Nachdem zwei benachbarte Lagen miteinander verschweißt sind, lassen sich die Lagen aufklappen, so dass sie zueinander in einem Randbereich einen Winkel bilden. Der Zwischenraum, der zwischen den Lagen gebildet ist, wird Falte genannt. Dieser stellt insbesondere bei den radial durchströmten Partikelfiltern einen Strömungskanal bzw. Kanal dar.

Außerdem wird auch vorgeschlagen, dass die verschweißten Lagen mit wenigstens einem Gehäuse verbunden werden, vorzugsweise verschweißt oder verlötet. Bei axial durchströmten Körpern erfolgt bevorzugt eine direkte Verbindung der Lagen mit dem außen liegenden Gehäuse. Hierzu können bekannte Löt- oder Schweißtechniken angewendet werden. Für den Fall, dass der Körper ein radial durchströmbares Konzept verwirklicht, so wird eine Verbindung hin zu einem außen liegenden Gehäuse in der Regel nur mittelbar, also über zusätzliche Elemente verwirklicht. Üblicherweise wird bei solchen Konzepten ein direkt mit den Lagen verbundenes Gehäuse, welches am äußeren Umfang des Körpers angeordnet ist, vermieden, da dieser Ringraum üblicherweise zur Anströmung bzw. Abströmung des Gasstromes benötigt wird. Die Fixierung des außen liegenden Gehäuses erfolgt dann über ggf. zusätzliche Bauteile, wie Distanzhalter, Deckplatten, Kragen od. dgl..

Gerade im Zusammenhang mit dem radialen Durchströmungskonzept wird vorgeschlagen, dass das Gehäuse ein Innenrohr mit einer Zentrumsachse ist, auf dessen äußere Mantelfläche die Lagen befestigt werden. Dazu wird das Innenrohr mit Löchern bzw. Strömungspassagen versehen, die das Innenrohr für das Abgas durchströmbar machen, ohne einen hohen Strömungswiderstand zu erzeugen. Damit ist eine einfache Verbindung des Hohlraumes, der im Inneren des Mantelrohres angeordnet ist, hin zu den Falten, die durch die außen angeordneten Lagen gebildet sind, geschaffen. Die Verbindung der Lagen hin zum Innenrohr kann durch mechanische Verbindungsmittel oder durch thermisches Fügen verwirklicht sein. Gerade im Hinblick auf die Befestigung mit mechanischen Befestigungsmitteln ist davon auszugehen, dass das Innenrohr, bevorzugt mehrteilig aufgebaut ist. Um eine Umlenkung des Gasstromes hin zu den Filterflächen zu bewirken, ist das Innenrohr üblicherweise mit einem verschlossenen Ende ausgestattet

Gemäß einer vorteilhaften Ausgestaltung sind die Lagen so anzuordnen, dass die Verbindungsbereiche und/oder die von den Lagen gebildeten Falten bzw. Kanäle in Richtung der Zentrumsachse verlaufen. Bezüglich der Formulierung "in Richtung der Zentrumsachse" sei klarstellend darauf hingewiesen, dass hier keine besondere Exaktheit erforderlich ist, vielmehr sind unter Umständen relativ große Toleranzen möglich. Dabei sind also mehrere Falten geschaffen, die in Umfangsrichtung benachbart zueinander angeordnet sind und sich bevorzugt über einen großen Teilabschnitt des Innenrohres erstrecken. Die Verbindungsbereiche der Lagen miteinander bzw. der Lagen und dem Innenrohr verlaufen dabei in axialer Richtung parallel zur Zentrumsachse.

In einer alternativen Ausgestaltung sind die Lagen so angeordnet, dass die Verbindungsbereiche und/oder die von den Lagen gebildeten Falten bzw. Kanäle senkrecht zu der Zentrumsachse verlaufen. Bezüglich der Formulierung "senkrecht zu der Zentrumsachse" sei klarstellend darauf hingewiesen, dass hier keine besondere Exaktheit erforderlich ist, vielmehr sind unter Umständen relativ große Toleranzen möglich. Das Merkmal bedeutet insbesondere, dass die Falte als sich in Umfangsrichtung erstreckender Ringkanal ausgebildet ist. Mehrere solcher ringförmig ausgebildeter Falten sind (in Richtung der Zentrumsachse gesehen) beabstandet zueinander angeordnet Die Verbindungsbereiche der Lagen miteinander bzw. der Lagen und dem Innenrohr verlaufen in Umfangsrichtung.

Gemäß einem anderen Aspekt der Erfindung wird ein Körper zur Abgasbehandlung mobiler Verbrennungskraftmaschinen mit den Merkmalen des Patentanspruch 12 vorgeschlagen, der nach einem der vorstehend erläuterten Verfahren hergestellt wird. Der Körper weist eine Mehrzahl von metallischen Lagen auf, bei dem die Lagen in einem Verbindungsbereich miteinander in Kontakt sind, und eine Rollnaht-Schweißverbindung zwischen zumindest einem Teil der Lagen vorgesehen ist, so dass die Lagen für ein Fluid durchströmbare Kanäle bilden. Ein solcher Körper eignet sich als Katalysator-Trägerkörper, Adsorber, Filterkörper oder Strömungsmischer. Es ist auch möglich, den Körper so auszugestalten, dass Zonen mit unterschiedlichen Funktionen gebildet sind, beispielsweise, dass er in verschiedenen Zonen unterschiedliche Beschichtungen aufweist. Es ist auch möglich, die Lagen im Hinblick auf die Gasdurchlässigkeit bzw. die Strukturierung in den Zonen verschieden auszuführen, so dass in Strömungsrichtung unterschiedliche Abgasreinigungsschnitte sequentiell ablaufen.

Die Erfindung sowie das technische Umfeld wird nun mit Bezug auf die Figuren näher erläutert. Die Figuren zeigen besonders bevorzugte Ausführungsbeispiele, auf die sich die Erfindung jedoch nicht begrenzen lässt. Vielmehr ist das Fertigungsverfahren Rollnahtschweißen für eine Vielzahl unterschiedlicher Bauformen von Körpern zur Abgasreinigung einsetzbar, wobei insbesondere die Verbindung der die Strömungskanäle bildenden Lagen mit diesen Fertigungsverfahren erzeugt wird.

Es zeigen:
- Fig. 1: schematisch den Ablauf einer Ausgestaltung des Verfahrens zur Herstellung eines Körpers zur Abgasbehandlung,
- Fig. 2: eine Detailansicht einer Ausführungsvariante eines Körpers zur Abgasbehandlung,
- Fig. 3: eine weitere schematische Darstellung eines Ausführungsbeispiels des Körpers,
- Fig. 4: ein Ausführungsbeispiel eines Körpers mit Längsfalten,
- Fig. 5: eine weitere Ausgestaltung eines Körpers mit koaxialen Falten, und
- Fig. 6: ein weiteres Ausführungsbeispiel eines Körpers mit Falten in Umfangsrichtung.

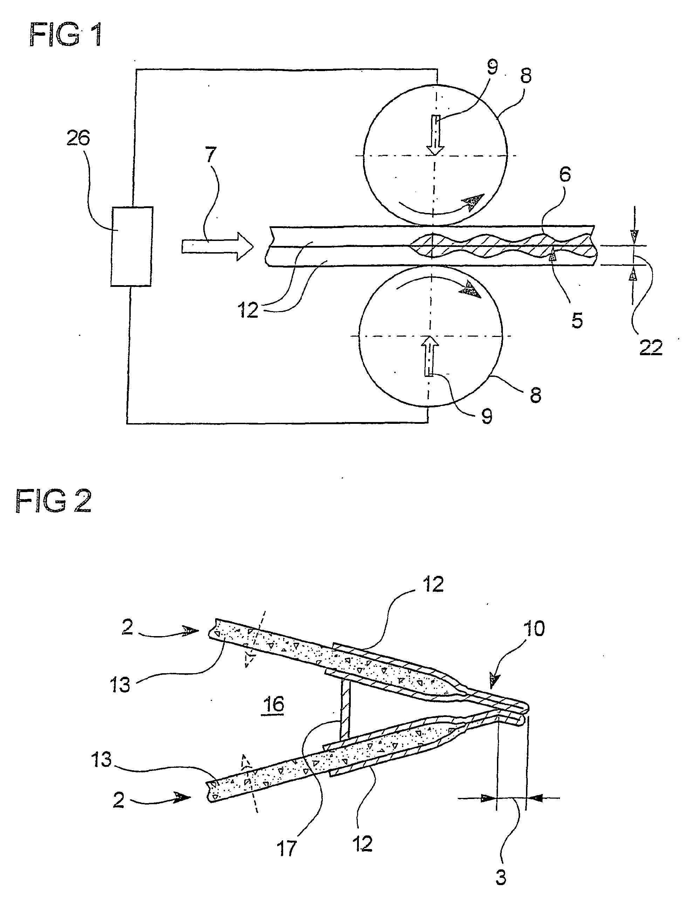

Fig. 1 zeigt schematisch den Ablauf des Fertigungsverfahrens Rollnahtschweißen, welches hier zur Herstellung eines Körpers zur Abgasbehandlung verwendet bzw. eingesetzt wird. In der Fig. 1 sind zwei metallische Folien 12 dargestellt, die miteinander in Kontakt gebracht werden. Die aufeinander aufliegenden Folien 12 werden durch zwei, sich drehende Elektroden 8 mit einer Vorschubgeschwindigkeit 7 hindurchgeführt. Dabei drücken die beiden Elektroden 8 mit einer Kraft 9 auf die Oberfläche der Folien 12. Die beiden Elektroden 8 sind über eine Stromquelle 26 miteinander verbunden, wobei mit vorgegebener Frequenz zwischen den Elektroden 8 und somit auch lokal durch die Folien 12 hindurch Strom fließt. Der Strom führt zur Erwärmung der Folien 12, so dass diese zumindest teilweise schmelzförmig werden. Die Folien 12 weisen dabei beispielsweise eine Dicke 22 auf, die im Bereich von 0,02 bis 0,1 mm liegt. Infolge der Joule'schen Widerstands erwärmung bildet sich im Kontaktbereich der beiden Folien 12 eine Vielzahl von Schweißpunkten 6 auf, die bevorzugt ineinander übergehen, so dass eine Dichtnaht 5 gebildet ist.

Fig. 2 zeigt schematisch und in einer Detailansicht einen Verbindungsbereich 3, der zwischen zwei benachbarten Lagen 2 ausgebildet ist. Die Lagen 2 sind mit einem Filtervlies 13 gebildet, welches nahe einem Randbereich 10 mit einer Folie 12 versehen ist, welches gebördelt wurde. Die Folien 12 stehen hinsichtlich des Filtervlies 13 über -und bilden einen Randbereich 10, welcher schließlich durch die drehenden Elektroden 8 hindurchgeschoben wird, so dass zwischen den beiden Folien 12 eine Rollnaht-Schweißverbindung generiert wird. Während das Filtervlies 13 gasdurchlässig ausgeführt ist, wie anhand der gestrichelten Pfeile angedeutet wird, ist die Folie 12 selbst hier gasundurchlässig. Die Folie 12 dient dabei gleichzeitig zur Fixierung von Stützmitteln 17, die eine bestimmte Position der Lagen 2 zueinander sicherstellt, so dass die Falten 16 stets die gewünschte Form aufweisen.

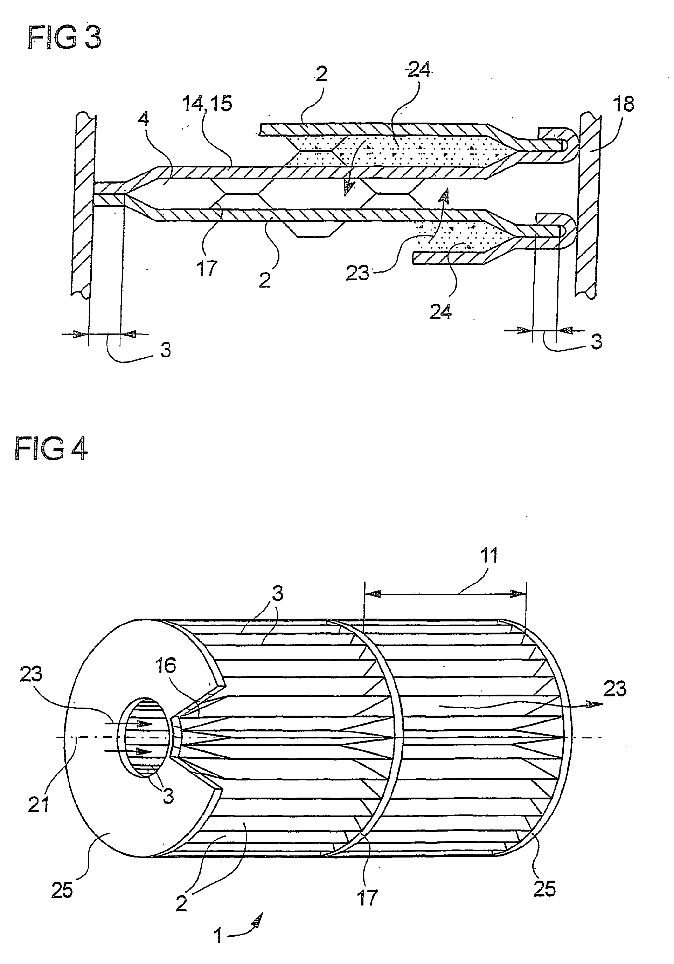

Fig. 3 zeigt einen Körper in Plattenbauweise, wobei die Lagen 2 im wesentlichen parallel zueinander angeordnet sind. Die plattenförmigen Lagen 2 umfassen in der dargestellten Ausführungsform eine Tragstruktur 14, in der ein Filtermaterial 15 integriert ist. In den Randbereichen der Lagen 2 ist jeweils wechselseitig ein Verbindungsbereich 3 gebildet. Der Verbindungsbereich 3 weist wiederum Rollnaht-Schweißverbindungen auf. Der Verbindungsbereich 3 liegt unmittelbar an einem Gehäuse 18 an und ist mit diesem fügetechnisch verbunden. Die zwischen den Lagen 2 angeordneten Stützmittel 17 sind beispielsweise strukturierte Metallfolien, oder Strukturen der Lagen 2 selbst, die verhindern, dass die Lagen 2 direkt flach aufeinander liegen. Weiter ist zu erkennen, dass bei dem dargestellten Körper 1 das Prinzip des "geschlossenen Partikelfilters" verwirklicht ist, wobei benachbarte Kanäle 4 mit einem Verschluss 24 versehen sind, so dass der Gasstrom durch die Lagen 2 in Strömungsrichtung 23 durchtreten muss.

Fig. 4 zeigt eine andere Ausführungsvariante eines Körpers 1 zur Abgasbehandlung, der insbesondere als Filter eingesetzt wird. Dabei ist ein radial durchströmbares Konzept gezeigt, bei dem der zu reinigende Gasstrom zunächst in Richtung der Zentrumsachse 21 durch die Deckplatte 25 in einen inneren Bereich eintritt. Die rückseitige Deckplatte 25 verschließt den innenliegenden Strömungskanal und zwingt somit das Abgas, durch die Lagen 2 hindurchzutreten, die die Falten 16 bilden. Der dargestellte Körper 1 weist wiederum Stützmittel 17 auf, welche die Position der Lagen 2 zueinander auch unter auftretenden Druckschwankungen der Gasströmung gewährleisten. Bei dem dargestellten Ausführungsbeispiel sind die Lagen 2 so angeordnet, dass die Verbindungsbereiche 3 und die von den Lagen 2 gebildeten Falten 16 in Richtung der Zentrumsachse 21 verlaufen. Die Verbindungsbereiche 3 sind dabei jeweils über einen Abschnitt 11 ausgeführt.

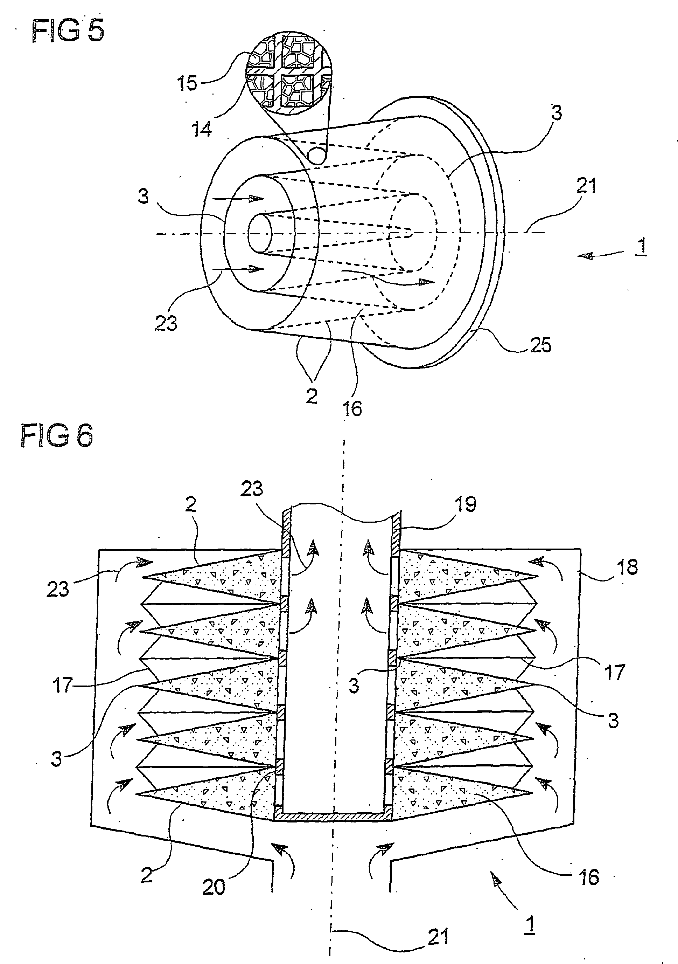

Fig. 5 zeigt eine weitere Ausführungsvariante eines Körpers 1, insbesondere eines Filterkörpers. Die Falten 16 verlaufen hier im wesentlichen koaxial zur Zentrumsachse 21. Die Lagen 2 sind hier stirnseitig an einer zumindest teilweise für das Abgas durchströmbaren Deckplatte 25 montiert. Die Verbindungsbereiche 3 der benachbart zueinander angeordneten Lagen 2 sind im wesentlichen koaxial zur Zentrumsachse 21 angeordnet, wobei wiederum das Prinzip des "geschlossenen Partikelfilters" verwirklicht ist. Die Lagen 2 umfassen hier eine Tragstruktur 14, in der zusätzlich das Filtermaterial 15 vorgesehen ist.

Fig. 6 zeigt einen Körper 1, bei dem die Lagen 2 so angeordnet sind, dass die Verbindungsbereiche 3 und die mit den Lagen 2 gebildeten Falten 16 im wesentlichen senkrecht zu der Zentrumsachse 21 verlaufen. Die Lagen 2 sind auf einer äußeren Mantelfläche 20 eines Innenrohres 19 befestigt. Das Innenrohr 19 hat Öffnungen, durch die der Gasstrom radial einwärts eintreten kann, wie dies durch die Pfeile der Strömungsrichtung 23 angedeutet ist. Zwischen den Lagen 2 sind außerhalb der gepunktet dargestellten Falten 16 zusätzliche Stützmittel 17 angeordnet, wobei diese hier einerseits mit dem Innenrohr 19 und andererseits mit den Lagen 2 verbunden sind. Die gesamte Anordnung wird zudem von einem, von den Lagen 2 beabstandeten, Gehäuse 18 umschlossen. Die Verbindungsbereiche 3, die nach dem Rollnaht-Schweißverfahren generiert wurden, sind auf dem äußeren Umfang bzw. dem innen liegenden Umfang der Lagen 2 gebildet. Sie stellen jeweils eine Verbindung der zueinander benachbart angeordneten Lagen 2 dar.

### Bezugszeichenliste

- 1: Körper
- 2: Lage
- 3: Verbindungsbereich
- 4: Kanal
- 5: Dichtnaht
- 6: Schweißpunkt
- 7: Vorschubgeschwindigkeit
- 8: Elektrode
- 9: Kraft
- 10: Randbereich
- 11: Abschnitt
- 12: Folie
- 13: Filtervlies
- 14: Tragstruktur
- 15: Filtermaterial
- 16: Falte
- 17: Stützmittel
- 18: Gehäuse
- 19: Innenrohr
- 20: Mantelfläche
- 21: Zentrumsachse
- 22: Dicke
- 23: Strömungsrichtung
- 24: Verschluss
- 25: Deckplatte
- 26: Stromquelle

## Patentansprüche

1. Verfahren zur Herstellung eines Körpers (1) zur Abgasbehandlung, welcher eine Mehrzahl von metallischen Lagen (2) aufweist, wobei die Lagen (2) mit einer ein Filtermaterial (15) umfassenden Tragstruktur (14) gebildet sind und die Lagen (2) mit Stützmitteln (17) ausgeführt sind, die in einem Kanal (4) und/oder in einer Falte (16) angeordnet werden, bei dem weiter die Lagen (2) in einem Verbindungsbereich (3) miteinander in Kontakt gebracht werden und eine Verbindung mit einem fortlaufenden Widerstandsschweißverfahren derart erzeugt wird, dass die Lagen (2) für einen Gasstrom wenigstens teilweise durchströmbare Kanäle (4) bildet, wobei das fortlaufende Widerstandsschweißverfahren Rollnahtschweißen umfasst, eine Vorschubgeschwindigkeit (7) beim Rollnahtschweißen im Bereich von 0,5 m/min bis 30 m/min vorliegt und die Elektroden (8) während des Schweißvorgangs eine Kraft (9) von 200 N bis 6 kN auf die Lagen (2) ausüben, so dass die Stützmittel (17) mit der Lage (2) durch das Fertigungsverfahren Rollnahtschweißen gleichzeitig mit dem Ausführen einer Verbindung der Lagen (2) untereinander verbunden werden.

2. Verfahren nach Anspruch 1, **dadurch gekennzeichnet, dass** das fortlaufende Widerstandsschweißverfahren Buckelnaht-schweißen umfasst.

3. Verfahren nach Anspruch 1, bei dem zumindest teilweise eine Dichtnaht (5) gebildet wird, wobei zumindest-überlappende Schweißpunkte (6) vorliegen.

4. Verfahren nach einem der vorhergehenden Ansprüche, bei dem die Lagen (2) zumindest in einem Randbereich (10) aufeinandergelegt, in diesem Randbereich wenigstens über einen Abschnitt (11) geschweißt und dann umgeformt werden, so dass die Kanäle (4) gebildet sind.

5. Verfahren nach einem der vorhergehenden Ansprüche, bei dem die Lagen (2) mit zumindest einer metallischen Folie (12) aus einem hochtemperaturfesten und korrosionsbeständigen Material gebildet sind, die bevorzugt zumindest teilweise strukturiert und/oder für ein Fluid wenigstens bereichsweise durchströmbar ist.

6. Verfahren nach einem der vorhergehenden Ansprüche, bei dem die Lagen (2) mehrteilig aufgebaut sind, wobei die Lagen (2) in dem Verbindungsbereich (3) mit einer metallischen Folie (12) versehen ist, wobei die metallischen Folien (12) benachbart zueinander angeordneter Lagen (2) mittels Rollnahtschweißen verbunden werden.

7. Verfahren nach einem der vorhergehenden Ansprüche, bei dem die Lagen (2) so miteinander verschweißt werden, dass diese in den Randbereichen (10) wechselseitig zu jeweils einer benachbarten Lage (2) hin verbunden sind, und derart jeweils eine Falte (16) gebildet wird.

8. Verfahren nach einem der vorhergehenden Ansprüche, wobei die verschweißten Lagen (2) mit wenigstens einem Gehäuse (18) verbunden werden, vorzugsweise verschweißt oder verlötet.

9. Verfahren nach Anspruch 8, bei dem das Gehäuse (18) ein Innenrohr (19) mit einer Zentrumsachse (21) ist, auf dessen äußere Mantelfläche (20) die Lagen (2) befestigt werden.

10. Verfahren nach Anspruch 9, bei dem die Lagen (2) so angeordnet werden, dass die Verbindungsbereiche (3) und/oder die von den Lagen (2) gebildeten Falten (16) bzw. Kanäle (4) in Richtung der Zentrumsachse (21) verlaufen.

11. Verfahren nach Anspruch 10, bei dem die Lagen (2) so angeordnet werden, dass die Verbindungsbereiche (3) und/oder die von den Lagen (2) gebildeten Falten (16) bzw. Kanäle (4) im wesentlichen senkrecht zu der Zentrumsachse (21) verlaufen.

12. Körper (1) zur Abgasbehandlung mobiler Verbrennungskraftmaschinen hergestellt nach einem Verfahren gemäß einem der vorstehenden Ansprüche, welcher eine Mehrzahl von metallischen Lagen (2) aufweist, bei dem die Lagen (2) mit einer ein Filtermaterial (15) umfassenden Tragstruktur (14) gebildet sind und die Lagen (2) mit Stützmitteln (17) ausgeführt sind, die in einem Kanal (4) und/oder in einer Falte (16) angeordnet werden und in einem Verbindungsbereich (3) miteinander in Kontakt sind, **dadurch gekennzeichnet, dass** eine Rollnaht-Schweißverbindung zwischen zumindest einem Teil der Lagen (2) vorgesehen ist, so dass die Lagen (2) für ein Fluid durchströmbare Kanäle (4) bilden und die Stützmittel (17) mit der Lage (2) sowie die Lagen (2) untereinander eine Rollnaht-Schweißverbindung ausbilden und weiterhin ein Gehäuse (18) ein Innenrohr (19) mit einer Zentrumsachse (21) ist, auf dessen äußerer Mantelfläche (20) die Lagen (2) befestigt sind und die Verbindungsbereiche (3) und/oder die von den Lagen (2) gebildeten Falten (16) bzw. Kanäle (4) in Richtung der Zentrumsachse (21) verlaufen.

## Claims

1. A process for producing a body (1) for exhaust gas treatment, which has a plurality of metallic layers (2), in which the layers (2) are formed with a supporting structure (14) comprising a filter material (15) and the layers (2) are designed with supporting means (17), which are arranged in a passage (4) and/or in a fold (16), in which process further the layers (2) are brought into contact with one another in a connection region (3), and a connection is produced by a continuous resistance welding process, in such a manner that the layers (2) form passages (4) through which a gas stream can at least partially flow, wherein the continuous resistance welding process comprises roller seam welding, the feed rate (7) of the roller seam welding is in the range from 0.5 m/min to 30 m/min and the electrodes (8) exert a force (9) during the welding operation of from 200 N to 6 kN, on the layers (2), so that the supporting means (17) are connected to the layer (2) by the roller seam welding manufacturing process at the same time as a connection of the layers (2) to one another is being executed.

2. The process as claimed in claim 1, **characterized in that** the continuous resistance welding process comprises projection seam welding.

3. The process as claimed in claim 1, in which at least in part a sealed seam (5) in which there are overlapping weld spots (6) is formed.

4. The process as claimed in one of the preceding claims, in which the layers (2), at least in an edge region (10), are laid on top of one another, are welded at least over a portion (11) in this edge region and are then deformed, so as to form the passages (4).

5. The process as claimed in one of the preceding claims, in which the layers (2) are formed with at least one metallic foil (12) which is made from a high-temperature-resistant and corrosion-resistant material and is preferably at least partially structured and/or allows a fluid to flow through it at least in regions.

6. The process as claimed in one of the preceding claims, in which the layers (2) are of multi-part structure, the layers (2) being provided with a metallic foil (12) in the connecting region (3), the metallic foils (12) of layers (2) arranged adjacent to one another being connected by means of roller seam welding.

7. The process as claimed in one of the preceding claims, in which the layers (2) are welded together in such a way that they are connected in the edge regions (10) on alternate sides to in each case an adjacent layer (2), so as to in each case form a fold (16).

8. The process as claimed in one of the preceding claims, in which the welded layers (2) are connected to at least one housing (18), preferably by welding or brazing.

9. The process as claimed in claim 8, in which the housing (18) is an inner tube (19) with a center axis (21), to the outer lateral surface (20) of which inner tube the layers (2) are secured.

10. The process as claimed in claim 9, in which the layers (2) are arranged in such a way that the connecting regions (3) and/or the folds (16) or passages (4) formed by the layers (2) run in the direction of the center axis (21).

11. The process as claimed in claim 10, in which the layers (2) are arranged in such a way that the connecting regions (3) and/or the folds (16) or passages (4) formed by the layers (2) run substantially perpendicular to the center axis (21).

12. A body (1) for treating the exhaust gases from mobile internal combustion engines, produced by the process as claimed in one of the preceding claims, which has a plurality of metallic layers (2), in which the layers (2) are formed with a supporting structure (14) comprising a filter material (15) and the layers (2) are designed with supporting means (17), which are arranged in a passage (4) and/or in a fold (16), and in which the layers (2) are in contact with one another in a connection region (3), **characterized in that** a roller seam welded joint is provided between at least some of the layers (2), so that the layers (2) form passages (4) through which a fluid can flow, and the supporting means (17) are forming a roller seam welded joint with the layer (2) and the layers (2) with each other, and further a housing (18) is an inner tube (19) with a center axis (21), to the outer lateral surface (20) of which inner tube the layers (2) are secured, and the connecting regions (3) and/or the folds (16) or passages (4) formed by the layers (2) run in the direction of the center axis (21).

## Revendications

1. Procédé destiné à la fabrication d'un corps (1) pour le traitement de gaz d'échappement, lequel a une pluralité de couches métalliques (2), les couches (2) étant formées avec une structure de support (14) comprenant un matériau de filtre (15) et les couches (2) étant réalisées avec des moyens d'appui (17) qui sont agencés dans un canal (4) et/ou dans un pli (16), procédé, dans lequel les couches (2) sont mises en outre en contact les unes avec les autres dans une région de connexion (3) et une connexion avec un procédé continu de soudage par résistance étant générée de manière telle que les couches (2) forment des canaux (4) à travers lesquels un flux de gaz peut au moins partiellement s'écouler, le soudage continu par résistance comprenant le soudage à la molette, une vitesse d'avance (7) lors du soudage à la molette se trouvant dans l'étendue de 0,5 m/min à 30 m/min et les électrodes (8) exerçant une force (9) de 200 N à 6 kN sur les couches (2) durant le processus de soudage, de sorte que les moyens d'appui (17) sont connectés à la couche (2) par le procédé de fabrication de soudage à la molette en même temps qu'une exécution de connexion des couches (2) entre elles.

2. Procédé selon la revendication 1, **caractérisé en ce que** le procédé continu par résistance comprend le soudage à bossages.

3. Procédé selon la revendication 1, dans lequel un joint d'étanchéité (5) est formé au moins partiellement, des points de soudage (6) se recouvrant au moins existent.

4. Procédé selon l'une des revendications précédentes, dans lequel les couches (2) sont disposées l'une sur l'autre au moins dans une région de bord (10), soudées au moins sur une section (11) dans cette région de bord et ensuite déformées, de sorte que les canaux (4) soient formés.

5. Procédé selon l'une des revendications précédentes, dans lequel les couches (2) sont formées avec au moins une feuille métallique (12) d'un matériau résistant aux températures élevées et à la corrosion, ladite feuille métallique étant structurée de préférence partiellement et/ou pouvant être traversée au moins par régions.

6. Procédé selon l'une des revendications précédentes, dans lequel les couches (2) sont construites en plusieurs parties, les couches (2) étant dotées d'une feuille métallique (12) dans la région de connexion (3), les feuilles métalliques (12) de couches (2) agencées de façon adjacente les unes par rapport aux autres sont reliées au moyen de soudage à la molette.

7. Procédé selon l'une des revendications précédentes, dans lequel les couches (2) sont soudées entre elles de manière telle que dans les régions de bord (10) celles-ci sont reliées mutuellement à une couche (2) adjacente respective et que de manière telle un pli (16) respectif est formé.

8. Procédé selon l'une des revendications précédentes, les couches (2) soudées étant reliées à au moins un boîtier (18), de préférence soudé ou brasé.

9. Procédé selon la revendication 8, dans lequel le boîtier (18) est un tube intérieur (19) avec un axe central (21), sur la surface d'enveloppe extérieure (21) duquel les couches (2) sont fixées.

10. Procédé selon la revendication 9, dans lequel les couches (2) sont agencées de manière telle que les régions de connexion (3) et/ou les plis (16) formés par les couches (2), respectivement les canaux (4), s'étendant en direction de l'axe central (21).

11. Procédé selon la revendication 10, dans lequel les couches (2) sont agencées de manière telle que les régions de connexion (3) et/ou les plis (2), respectivement les canaux (4), formés par les couches (2) s'étendent sensiblement de manière verticale par rapport à l'axe central (21).

12. Corps (1) destiné au traitement de gaz d'échappement de machines à combustion interne mobiles, lequel corps est fabriqué selon un procédé selon les revendications précédentes qui a un pluralité de couches métalliques (2), où les couches (2) sont formées avec une structure de support (14) comprenant un matériau de filtre (15) et les couches (2) étant réalisées avec des moyens d'appui (17) qui sont agencés dans un canal (4) et/ou dans un pli (16), et sont en contact les unes avec les autres dans une région de connexion (3), **caractérisé en ce qu'**au moins entre une partie des couches (2) un joint soudé, soudé à la molette est prévu, de sorte que les couches (2) forment des canaux (4) à travers lesquels un fluide peut s'écouler, et les moyens d'appui (17) forment un joint soudé, soudé à la molette avec la couche (2) ainsi que les couches (2) entre-elles un joint soudé, soudé à la molette, et un boîtier (18) est un tube intérieur (19) avec un axe central (21) sur la surface d'enveloppe extérieure (20) duquel sont fixées les couches (2) et les régions de connexion (3) et/ou les plis (16), respectivement les canaux (4), formés par les couches (2) s'étendent en direction de l'axe central(21).
